# FASCICULE DE BREVET EUROPEEN

(11) **EP 3 576 268 B1**
(45) Date de publication et mention de la délivrance du brevet: **18.10.2023**
(21) Numéro de dépôt: 19176301.0
(22) Date de dépôt: 23.05.2019
(51) Int. Cl.: H02M 1/00, H02J 1/10, H02J 9/00

(54) **CIRCUIT ÉLECTRONIQUE D'ALIMENTATION**
ELEKTRONISCHER STROMKREIS
ELECTRONIC POWER CIRCUIT

(30) Priorité: 29.05.2018 FR 1870617
(43) Date de publication de la demande: 04.12.2019
(73) Titulaire: STMicroelectronics S.r.l., 20864 Agrate Brianza (MB) (IT); STMICROELECTRONICS (ROUSSET) SAS, 13790 Rousset (FR)
(72) Inventeur: CUENCA, Michel, 13240 SEPTEMES LES VALLONS (FR); GAILHARD, Bruno, 13840 ROGNES (FR); MANGANO, Daniele, 95027 SAN GREGORIO DI CATANIA (IT)
(74) Mandataire: Cabinet Beaumont

(56) Documents cités:
- GB-A- 2 510 394
- US-A1- 2013 162 233
- US-A1- 2015 155 783
- US-A1- 2015 160 668
- US-A1- 2017 063 229
- US-B1- 6 469 478
- US-B1- 8 258 766
- US-B2- 8 154 262
- US-B2- 8 988 054

## Description

### Domaine

La présente demande concerne les circuits électroniques et plus particulièrement les circuits comprenant des alimentations à découpage.

### Exposé de l'art antérieur

Les alimentations à découpage sont des convertisseurs DC/DC qui incorporent un ou plusieurs éléments de commutation. Comme les autres types d'alimentations, les alimentations à découpage transfèrent une puissance fournie par une source DC à une charge, en modifiant les caractéristiques de courant et/ou de tension. Pour alimenter une charge, l'alimentation à découpage peut être utilisée en parallèle d'un convertisseur linéaire pour adapter la tension à l'état de fonctionnement de la charge. Un exemple est US 2017/063229.

### Résumé de l'invention

Ainsi, l'objet de la présente demande est défini dans les revendications indépendantes 1 et 9. Les revendications dépendantes définissent des réalisations spécifiques. Plus généralement, un mode de réalisation prévoit un circuit électronique comprenant:
- une alimentation à découpage ;
- un circuit de régulation linéaire de tension comprenant au moins un étage d'entrée et des premier et deuxième étages de sortie, le premier étage de sortie comprenant un transistor dont la grille et le substrat sont configurés pour pouvoir être, de manière commandable, reliés à un noeud d'application d'une tension d'alimentation de l'alimentation à découpage ; et
- une première charge étant alimentée soit par l'alimentation à découpage en série avec le circuit de régulation soit par le circuit de régulation.

Selon le mode de réalisation, l'alimentation à découpage est reliée à un premier noeud par une inductance, le premier noeud étant relié à la masse par une capacité et étant connecté au premier étage de sortie.

Selon le mode de réalisation, le premier noeud est couplé à un deuxième noeud par l'intermédiaire du premier étage de sortie, le deuxième étage de sortie étant couplé entre une source d'application d'une tension d'alimentation et le deuxième noeud.

Selon un ajout au mode de réalisation, le circuit de régulation comprend :
- un premier régulateur linéaire de tension comprenant un premier étage d'entrée et le premier étage de sortie ; et
- un deuxième régulateur linéaire de tension comprenant un deuxième étage d'entrée et le deuxième étage de sortie.

Selon un mode de réalisation, le circuit de régulation comprend un seul étage d'entrée et deux étages de sortie.

Selon un ajout au mode de réalisation, le ou chaque étage d'entrée comprend un amplificateur opérationnel et chaque étage de sortie comprend un transistor.

Selon un mode de réalisation, les premier et deuxième étages de sortie sont chacun couplé au deuxième noeud par un interrupteur.

Selon un ajout au mode de réalisation, chaque étage de sortie comprend un interrupteur.

Selon un ajout au mode de réalisation, le circuit comprend une deuxième charge alimentée par l'alimentation à découpage.

Selon un ajout au mode de réalisation, la deuxième charge comprend un circuit d'émission et/ou réception de signaux radio fréquence.

Un autre mode de réalisation prévoit un procédé de commande d'un circuit électronique comprenant une première charge étant alimentée soit par une alimentation à découpage en série avec un circuit de régulation linéaire de tension, soit par le circuit de régulation linéaire de tension, le procédé comprenant :
- une première étape au cours de laquelle l'alimentation à découpage et le circuit de régulation sont démarrés, la première charge étant alimentée par le circuit de régulation seul ; et
- une deuxième étape au cours de laquelle la première charge est alimentée par l'alimentation à découpage en série avec le circuit de régulation.

Selon un ajout au mode de réalisation, le passage de la première étape à la deuxième étape est effectué après la fin de l'initialisation de l'alimentation à découpage.

Selon un ajout au mode de réalisation, le circuit de régulation linéaire de tension comprend au moins un étage d'entrée et des premier et deuxième étages de sortie.

Selon un ajout au mode de réalisation, au cours de la première étape, un troisème interrupteur, connecté entre la première charge et le premier régulateur, est ouvert et un quatrième interrupteur, connecté entre la première charge et le deuxième régulateur, est fermé, et, au cours de la deuxième étape, le troisième interrupteur est fermé et le quatrième interrupteur est ouvert.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une représentation schématique d'un mode de réalisation d'un circuit électronique ;
la figure 2 est une représentation schématique plus détaillée d'un élément du circuit de la figure 1 ;
la figure 3 est une représentation schématique d'un autre mode de réalisation d'un circuit électronique ; et
la figure 4 est une représentation schématique d'une partie d'un autre mode de réalisation d'un circuit électronique.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être directement reliés (connectés) ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence à l'orientation des figures.

Sauf précision contraire, les expressions "environ", "approximativement", "sensiblement", et "de l'ordre de" signifient à 10 % près, de préférence à 5 % près.

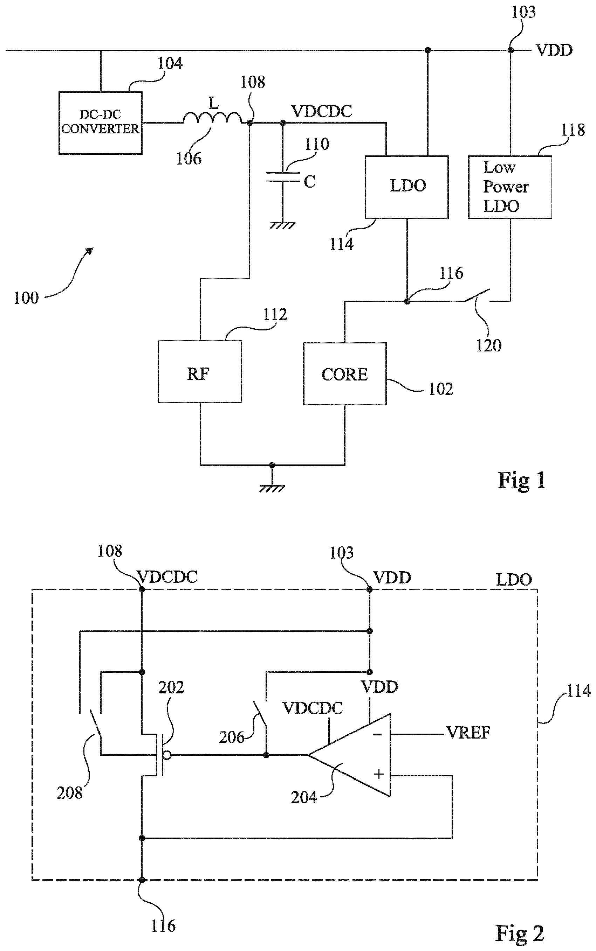

La figure 1 est une représentation schématique d'un mode de réalisation d'un circuit électronique 100. Le circuit 100 comprend une première charge, par exemple un circuit 102 (CORE). Le circuit 102 comprend par exemple des éléments logiques, par exemple un microprocesseur et des mémoires.

Le circuit 100 comprend de plus une alimentation à découpage 104 (DC-DC CONVERTER). L'alimentation à découpage 104 est connectée, en entrée, à un noeud 103 d'application d'une tension d'alimentation VDD, et, en sortie, à une première borne d'une inductance 106 (L). La deuxième borne de l'inductance 106 est connectée à un noeud 108. La tension sur le noeud 108 est une tension VDCDC fournie par l'alimentation à découpage 104. Le noeud 108 est relié à la masse par une capacité 110 (C).

Le circuit 100 peut comprendre une deuxième charge, par exemple un circuit 112 d'émission et/ou réception de signaux radio fréquence (RF). Le circuit 112 est connecté entre le noeud 108 et la masse et est alimenté par l'alimentation à découpage 104.

Le circuit 100 comprend de plus un régulateur linéaire de tension 114 (LDO). Le régulateur 114 est connecté, en entrée, au noeud 108 (tension VDCDC) et au noeud 103 d'application de la tension VDD, et, en sortie, à un noeud 116. Un mode de réalisation de régulateur 114 est décrit plus en détail en relation avec la figure 2.

Le circuit 102 est connecté entre le noeud 116 et la masse. Le circuit 102 est donc alimenté par l'alimentation à découpage 104 en série avec le régulateur 114.

Le circuit 100 peut comprendre un autre régulateur linéaire de tension 118 (LOW POWER LDO) destiné à un mode de fonctionnement basse puissance. Le régulateur 118 est couplé entre le noeud 103 d'application de la tension VDD et une première borne d'un interrupteur 120. L'autre borne de l'interrupteur 120 est connectée au noeud 116.

Dans un premier mode de fonctionnement, l'alimentation à découpage 104 est en fonctionnement. L'alimentation à découpage 104 alimente le circuit 112 directement et le circuit 102 par l'intermédiaire du régulateur 114. En outre, l'interrupteur 120 est ouvert. Le régulateur 118, pouvant ou non, de façon commandable, être en fonctionnement, n'a donc pas d'influence sur le circuit 100.

Dans un deuxième mode de fonctionnement dit "basse puissance", l'alimentation à découpage 104 et le régulateur 114 ne sont pas en fonctionnement, de même que le circuit 112 qui n'est pas alimenté. L'interrupteur 120 est fermé et le régulateur 118 est en fonctionnement, ce qui permet d'alimenter au moins une partie des éléments du circuit 102.

Dans un troisième mode de fonctionnement, dit "Standby", le circuit 112 est absent ou éteint et le circuit 118 est absent ou éteint. L'alimentation à découpage 104 et le régulateur 114 ne sont pas en fonctionnement. Le circuit 102 n'est pas alimenté.

Le régulateur 118 est configuré pour fournir une puissance relativement faible par rapport à la puissance fournie par le régulateur 114, par exemple suffisante pour alimenter une partie des éléments du circuit 102, typiquement en mode veille. Le régulateur 118 est par exemple configuré pour pouvoir alimenter des mémoires volatiles comprises dans le circuit 102.

La figure 2 est une représentation schématique plus détaillée d'un mode de réalisation du régulateur linéaire 114. Le régulateur 114 comprend deux entrées, connectées, comme en figure 1, au noeud 103 d'application de la tension d'alimentation VDD et au noeud 108. Le régulateur 114 comprend en outre une sortie connectée au noeud 116.

Le régulateur comprend un étage d'entrée et un étage de sortie. L'étage de sortie comprend un transistor 202 connecté entre les bornes 116 et 108. Le transistor 202, par exemple un transistor de type PMOS, est commandé par l'étage d'entrée, comprenant un amplificateur opérationnel 204. L'amplificateur opérationnel 204 est alimenté par les tensions VDD et VDCDC. Les entrées positive (+) et négative (-) de l'amplificateur opérationnel sont respectivement connectées au noeud 116 et à un noeud d'application d'une tension de référence VREF, inférieure à VDCDC.

Le régulateur 114 comprend un interrupteur 206 reliant la grille du transistor (la sortie de l'amplificateur opérationnel 204) et le noeud 103 d'application de la tension VDD. La grille du transistor 202 peut donc être connectée ou non, de façon commandable, au noeud 103 d'application de la tension VDD, et la tension VDD peut être appliquée ou non, de façon commandable, au niveau de la grille du transistor 202.

Le régulateur 114 peut comprendre en outre un interrupteur 208 reliant le substrat du transistor 202 soit au noeud 103 d'application de la tension VDD soit au noeud 108. Ainsi, la tension appliquée au substrat du transistor 202 peut être soit la tension VDCDC soit la tension VDD.

On pourrait choisir de connecter le régulateur linéaire de tension 114 en parallèle avec l'alimentation à découpage 104, c'est-à-dire entre le noeud 103 d'application de la tension VDD et le noeud 108 constituant la sortie de l'alimentation à découpage. Le circuit 102 serait alors connecté en parallèle avec le circuit 112 entre le noeud 108 et la masse.

Toutefois, le bruit généré par l'alimentation à découpage 104 risquerait alors d'être transmis au circuit 112 par l'intermédiaire d'un substrat commun aux circuits 112 et 102. En effet, le circuit 112 est configuré pour rejeter uniquement le bruit l'atteignant directement à partir du noeud 108 et est donc sensible à du bruit transmis par le circuit 102.

Durant le premier mode de fonctionnement décrit précédemment, dans lequel les circuits 102 et 112 sont alimentés par l'alimentation à découpage 104 et le régulateur 114, l'interrupteur 206 est ouvert et l'interrupteur 208, s'il est présent, relie le substrat du transistor 202 au noeud 108. Ainsi, le bruit généré par l'alimentation à découpage 104 n'est pas transmis au noeud 116 et n'est donc pas transmis au substrat commun des circuits 112 et 102.

Durant le deuxième mode de fonctionnement dit "basse puissance" et le troisième mode de fonctionnement dit "Standby", l'interrupteur 206 est fermé et l'interrupteur 202 relie le substrat du transistor au noeud 103 d'application de la tension VDD. Ainsi, la tension VDD est appliquée sur le substrat et sur la grille du transistor 202. Cela permet d'éviter les fuites de courant entre le noeud 108 et le noeud 116. Cela permet donc d'éviter de décharger la capacité 110 durant ce mode de fonctionnement. En effet, le transistor 202 est ouvert et les tensions grille/source et grille/drain de ce transistor 202 sont négatives, donc les fuites entre le drain et la source sont négligeables.

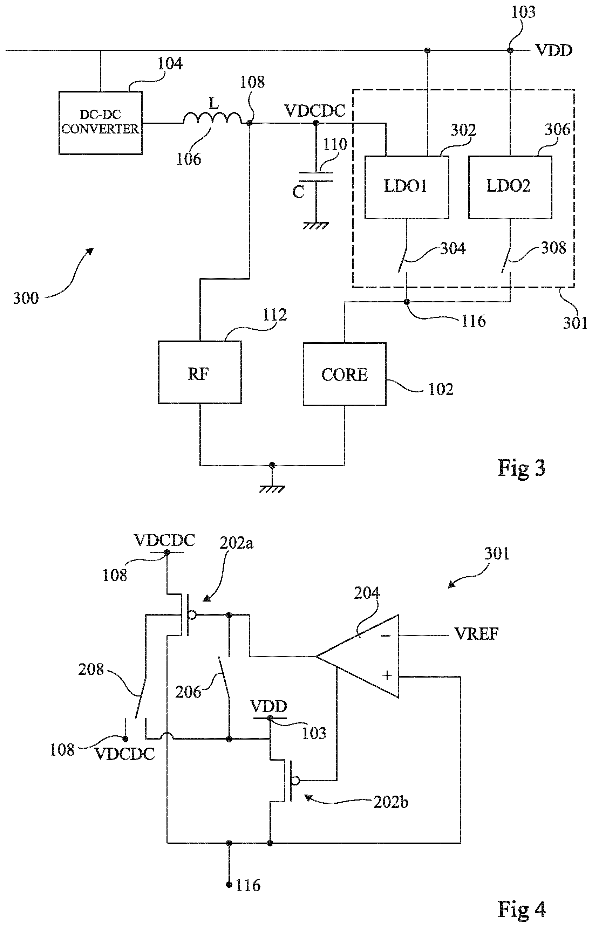

La figure 3 est une représentation schématique d'un autre mode de réalisation d'un circuit électronique 300.

Le circuit 300 comprend des éléments décrits précédemment en relation avec la figure 1 et connectés similairement. En particulier, le circuit 300 comprend l'alimentation à découpage 104, l'inductance 106, la capacité 110, le circuit 112 d'émission et/ou réception de signaux radio fréquence, et le circuit 102. Le circuit 300 comprend de plus un circuit de régulation linéaire de tension 301. Dans l'exemple de la figure 3, le circuit de régulation comprend un régulateur 302 (LDO1), remplaçant le régulateur 114, et qui peut par exemple comprendre les mêmes composants que le régulateur 114 (en particulier le transistor 202 et les interrupteurs 206 et 208) ou peut être un autre type de régulateur linéaire de tension. Le circuit de régulation comprend de plus un autre régulateur linéaire de tension 306 (LDO2). Le régulateur 306 est par exemple similaire au régulateur 114. Chaque régulateur 302 ou 306 comprend un étage d'entrée, comprenant un amplificateur opérationnel, et un étage de sortie comprenant un transistor.

Dans ce mode de réalisation, le régulateur 302 est relié au noeud 116 (constituant l'entrée du circuit 102) par un interrupteur 304. De plus, le régulateur linéaire de tension 306 est couplé entre le noeud 103 d'application de la tension VDD et une première borne d'un interrupteur 308, l'autre borne de l'interrupteur étant connectée au noeud 116. Le régulateur 306 peut alors être couplé entre le noeud 103 et le noeud 116 par l'intermédiaire du transistor de son étage de sortie. Le régulateur 306 est adapté à alimenter le circuit 102. Le régulateur 306 est par exemple similaire au régulateur 302 et apte à fournir une puissance supérieure à la puissance fournie par le régulateur 118 de la figure 1. Plus précisément, le régulateur 306 est par exemple apte à fournir une puissance suffisante pour faire fonctionner l'ensemble du circuit 102.

A titre de variante, les interrupteurs 304 et 308 peuvent ne pas être présents. Les transistors des étages de sortie des régulateurs 302 et 306 servent alors d'interrupteurs.

L'initialisation de l'alimentation à découpage 104, c'est-à-dire la période entre l'instant auquel l'alimentation à découpage 104 est allumée et l'instant auquel l'alimentation à découpage 104 est capable d'alimenter les circuits 112 et 102, est plus longue que l'initialisation d'un régulateur linéaire tel que le régulateur 306, par exemple au moins entre 30 et 1000 fois plus longue.

La figure 4 est une représentation schématique d'une partie d'un autre mode de réalisation d'un circuit électronique. Plus précisément, la figure 4 représente un exemple de réalisation du circuit de régulation 301.

Dans l'exemple de la figure 4, le circuit de régulation comprend un unique étage d'entrée et deux étages de sortie. Un premier étage de sortie comprend un transistor 202a, connecté entre le noeud 108 et le noeud 116, et un deuxième étage de sortie comprend un transistor 202b, connecté entre le noeud 103 et le noeud 116. Les transistors 202a et 202b sont similaires au transistor 202 de la figure 2. Les transistors 202a et 202b font respectivement fonction d'interrupteurs 304 et 308. Comme le transistor 202 de la figure 2, la grille du transistor 202a peut par exemple être connectée ou non, de façon commandable, au noeud 103 d'application de la tension VDD par l'intermédiaire de l'interrupteur 206. Le substrat du transistor 202a peut par exemple être connecté, par l'intermédiaire de l'interrupteur 208, au noeud 103 (VDD) ou au noeud 108 (VDCDC).

Le transistor 202a et le transistor 202b sont commandés par un même circuit, ici l'amplificateur opérationnel 204 de l'étage d'entrée. L'amplificateur opérationnel 204 comprend deux sorties, l'une connectée à la grille du transistor 202a et l'autre connectée à la grille du transistor 202b. L'entrée positive (+) de l'amplificateur opérationnel est connectée au noeud 116 et son entrée négative (-) reçoit la tension de référence VREF. Le circuit décrit en relation avec la figure 4 a un fonctionnement similaire à celui du circuit décrit en relation avec la figure 3.

Un mode de réalisation d'un procédé de commande du circuit électronique 300 comprend une première étape au cours de laquelle l'interrupteur 304 ou le transistor 202a, est ouvert et l'interrupteur 308, ou le transistor 202b, est fermé. Ainsi, le circuit 102, comprenant par exemple au moins un microprocesseur, est alimenté par le deuxième étage de sortie du circuit de régulation et est en mesure de fonctionner. Durant cette étape, l'alimentation à découpage 104 et le premier étage de sortie du régulateur sont allumés et l'initialisation de l'alimentation à découpage s'effectue.

Au cours d'une deuxième étape, l'interrupteur 304 ou le transistor 202a est fermé et l'interrupteur 308, ou le transistor 202b, est ouvert. Ainsi, le circuit 102 est alimenté par l'alimentation à découpage 104 et le premier étage de sortie du circuit de régulation. Le deuxième étage de sortie du circuit de régulation peut ensuite être éteint.

La deuxième étape intervient par exemple après la fin de l'initialisation de l'alimentation à découpage 104 qui peut alors alimenter les circuits 102 et 112.

Au cours d'une troisième étape (mode Bypass), le deuxième étage de sortie du circuit de régulation est rallumé et le premier étage de sortie du circuit de régulation est éteint. La capacité 110 reste chargée. Ainsi, lors du rallumage du régulateur 302 après la fin du mode bypass, le rendement est instantanément optimal.

Un avantage des modes de réalisation décrits en relation avec la figure 3 est qu'il n'est pas nécessaire d'attendre la fin de l'initialisation de l'alimentation à découpage 104 pour que le circuit 102 soit en fonctionnement.

Divers modes de réalisation et variantes ont été décrits.

Enfin, la mise en oeuvre pratique des modes de réalisation et variantes décrits est à la portée de l'homme du métier à partir des indications fonctionnelles données ci-dessus.

## Revendications

1. Circuit électronique comprenant :
- une alimentation à découpage (104) ;
- un circuit de régulation linéaire de tension comprenant un premier noeud (108) d'entrée relié à une sortie de l'alimentation à découpage via une inductance (106), un deuxième noeud (103) d'entrée relié à un noeud d'application d'une tension d'alimentation de l'alimentation à découpage, au moins un étage d'entrée et des premier et deuxième étages de sortie, le premier étage de sortie comprenant un premier transistor connecté entre le premier noeud d'entrée et un noeud de sortie (116) du circuit de régulation, le deuxième étage de sortie comprenant un deuxième transistor connecté entre le deuxième noeud d'entrée et le noeud de sortie (116) du circuit de régulation, la grille du premier transistor du premier étage étant reliée au deuxième noeud par un premier interrupteur (206), le substrat du premier transistor du premier étage étant connecté, par l'intermédiaire d'un deuxième interrupteur (208) au premier (108) ou deuxième (103) noeud d'entrée, ; et
- une première charge (102), connectée entre le noeud de sortie et la masse, étant alimentée soit par l'alimentation à découpage en série avec le circuit de régulation soit par le circuit de régulation.

2. Circuit selon la revendication 1, dans lequel l'alimentation à découpage est reliée au premier noeud (108) par une inductance (106), le premier noeud étant relié à la masse par une capacité (110).

3. Circuit selon la revendication 1 ou 2, dans lequel le circuit de régulation comprend :
- un premier régulateur linéaire de tension comprenant un premier étage d'entrée et le premier étage de sortie ; et
- un deuxième régulateur linéaire de tension comprenant un deuxième étage d'entrée et le deuxième étage de sortie.

4. Circuit selon l'une quelconque des revendications 1 à 3, dans lequel le circuit de régulation comprend un seul étage d'entrée et deux étages de sortie.

5. Circuit selon l'une quelconque des revendications 1 à 4, dans lequel le ou chaque étage d'entrée comprend un amplificateur opérationnel et chaque étage de sortie comprend un transistor.

6. Circuit selon l'une quelconque des revendications 1 à 5, dans lequel chaque étage de sortie comprend un interrupteur.

7. Circuit selon l'une quelconque des revendications 1 à 6, comprenant une deuxième charge (112) alimentée par l'alimentation à découpage (104).

8. Circuit selon la revendication 7, dans lequel la deuxième charge (112) comprend un circuit d'émission et/ou réception de signaux radio fréquence.

9. Procédé de commande d'un circuit électronique comprenant une première charge (102) étant alimentée soit par une alimentation à découpage (104) en série ,via une inductance (106), avec un circuit de régulation linéaire de tension (302), soit par le circuit de régulation linéaire de tension (306), la première charge étant connectée entre un noeud de sortie du circuit de régulation et la masse, le circuit de régulation linéaire de tension comprenant un premier noeud (108) d'entrée relié à une sortie de l'alimentation à découpage, un deuxième noeud (103) d'entrée relié à un noeud d'application d'une tension d'alimentation de l'alimentation à découpage, au moins un étage d'entrée et des premier et deuxième étages de sortie, le premier étage de sortie comprenant un premier transistor connecté entre le premier noeud d'entrée et un noeud de sortie (116) du circuit de régulation, le deuxième étage de sortie comprenant un deuxième transistor connecté entre le deuxième noeud d'entrée et le noeud de sortie (116) du circuit de régulation, la grille du premier transistor du premier étage étant reliée au deuxième noeud par un premier interrupteur (206), le substrat du premier transistor du premier étage étant connecté, par l'intermédiaire d'un deuxième interrupteur (208) au premier (108) ou deuxième (103) noeud d'entrée, le procédé comprenant :
- une première étape au cours de laquelle l'alimentation à découpage et le circuit de régulation sont démarrés, la première charge étant alimentée par le circuit de régulation seul ; et
- une deuxième étape au cours de laquelle la première charge est alimentée par l'alimentation à découpage en série avec le circuit de régulation.

10. Procédé selon la revendication 9, dans lequel le passage de la première étape à la deuxième étape est effectué après la fin de l'initialisation de l'alimentation à découpage (104).

11. Procédé selon la revendication 9 ou 10, dans lequel le circuit de régulation linéaire de tension comprend au moins un étage d'entrée et des premier et deuxième étages de sortie.

12. Procédé selon l'une quelconque des revendications 9 à 11, dans lequel, au cours de la première étape, un troisième interrupteur (304), connecté entre la première charge et le premier régulateur, est ouvert et un quatrième interrupteur (308), connecté entre la première charge et le deuxième régulateur, est fermé, et, au cours de la deuxième étape, le troisième interrupteur est fermé et le quatrième interrupteur est ouvert.

## Patentansprüche

1. Elektronische Schaltung, die Folgendes aufweist:
- ein Schaltnetzteil (104);
- eine lineare Spannungsregelschaltung, die einen ersten Eingangsknoten (108) aufweist, der über eine Induktivität (106) mit einem Ausgang des Schaltnetzteils gekoppelt ist, einen zweiten Eingangsknoten (103) aufweist, der mit einem Knoten zum Anlegen einer Versorgungsspannung des Schaltnetzteils gekoppelt ist, wenigstens eine Eingangsstufe aufweist und erste und zweite Ausgangsstufen aufweist, wobei die erste Ausgangsstufe einen ersten Transistor aufweist, der zwischen dem ersten Eingangsknoten und einem Ausgangsknoten (116) der Regelschaltung verbunden ist, wobei die zweite Ausgangsstufe einen zweiten Transistor aufweist, der zwischen dem zweiten Eingangsknoten und dem Ausgangsknoten (116) der Regelschaltung verbunden ist, wobei das Gate des ersten Transistors der ersten Stufe über einen ersten Schalter (206) mit dem zweiten Knoten gekoppelt ist, wobei das Substrat des ersten Transistors der ersten Stufe über einen zweiten Schalter (208) mit dem ersten (108) oder zweiten (103) Eingangsknoten verbunden ist; und
- eine erste Last (102), die zwischen den Ausgangsknoten und Masse angeschlossen ist und entweder von dem Schaltnetzteil in Reihe mit der Regelschaltung oder von der Regelschaltung versorgt wird.

2. Schaltung nach Anspruch 1, wobei das Schaltnetzteil über eine Induktivität (106) mit dem ersten Knoten (108) gekoppelt ist, wobei der erste Knoten über eine Kapazität (110) mit Masse verbunden ist.

3. Schaltung nach Anspruch 1 oder 2, wobei die Regelschaltung Folgendes aufweist:
- einen ersten linearen Spannungsregler, der eine erste Eingangsstufe und die erste Ausgangsstufe aufweist; und
- einen zweiten linearen Spannungsregler, der eine zweite Eingangsstufe und die zweite Ausgangsstufe aufweist.

4. Schaltung nach einem der Ansprüche 1 bis 3, wobei die Regelschaltung eine einzelne Eingangsstufe und zwei Ausgangsstufen aufweist.

5. Schaltung nach einem der Ansprüche 1 bis 4, wobei die oder jede Eingangsstufe einen Operationsverstärker aufweist und jede Ausgangsstufe einen Transistor aufweist.

6. Schaltung nach einem der Ansprüche 1 bis 5, wobei jede Ausgangsstufe einen Schalter aufweist.

7. Schaltung nach einem der Ansprüche 1 bis 6, die eine zweite Last (112) aufweist, die von dem Schaltnetzteil (104) versorgt wird.

8. Schaltung nach Anspruch 7, wobei die zweite Last (112) eine Schaltung zum Senden und/oder Empfangen von Funkfrequenzsignalen aufweist.

9. Verfahren zum Steuern einer elektronischen Schaltung, die eine erste Last (102) aufweist, die entweder von einem Schaltnetzteil (104) in Reihe, über eine Induktivität (106), mit einer linearen Spannungsregelschaltung (302) versorgt wird oder von der linearen Spannungsregelschaltung (306) versorgt wird, wobei die erste Last zwischen einem Ausgangsknoten der Regelschaltung und Masse angeschlossen ist, wobei die lineare Spannungsregelschaltung einen ersten Eingangsknoten (108) aufweist, der mit einem Ausgang des Schaltnetzteils gekoppelt ist, einen zweiten Eingangsknoten (103) aufweist, der mit einem Knoten zum Anlegen einer Versorgungsspannung des Schaltnetzteils gekoppelt ist, mindestens eine Eingangsstufe aufweist und erste und zweite Ausgangsstufen aufweist, wobei die erste Ausgangsstufe einen ersten Transistor aufweist, der zwischen dem ersten Eingangsknoten und einem Ausgangsknoten (116) der Regelschaltung angeschlossen ist, und wobei die zweite Ausgangsstufe einen zweiten Transistor aufweist, der zwischen dem zweiten Eingangsknoten und dem Ausgangsknoten (116) der Regelschaltung angeschlossen ist, wobei das Gate des ersten Transistors der ersten Stufe über einen ersten Schalter (206) mit dem zweiten Knoten gekoppelt ist, wobei das Substrat des ersten Transistors der ersten Stufe über einen zweiten Schalter (208) mit dem ersten (108) oder zweiten (103) Eingangsknoten verbunden ist, wobei das Verfahren Folgendes aufweist:
- einen ersten Schritt, während dem das Schaltnetzteil und die Regelschaltung gestartet werden, wobei die erste Last allein durch die Regelschaltung versorgt wird; und
- einen zweiten Schritt, während dem die erste Last durch das Schaltnetzteil in Reihe mit der Regelschaltung versorgt wird.

10. Verfahren nach Anspruch 9, wobei der Übergang vom ersten Schritt zum zweiten Schritt nach dem Ende der Initialisierung des Schaltnetzteils (104) erfolgt.

11. Verfahren nach Anspruch 9 oder 10, wobei die lineare Spannungsregelschaltung mindestens eine Eingangsstufe und erste und zweite Ausgangsstufen aufweist.

12. Verfahren nach einem der Ansprüche 9 bis 11, wobei im ersten Schritt ein dritter Schalter (304), der zwischen der ersten Last und dem ersten Regler geschaltet ist, ausgeschaltet und ein vierter Schalter (308), der zwischen der ersten Last und dem zweiten Regler geschaltet ist, eingeschaltet wird, und im zweiten Schritt der dritte Schalter eingeschaltet und der vierte Schalter ausgeschaltet wird.

## Claims

1. Electronic circuit comprising:
- a switched-mode power supply (104);
- a linear voltage regulation circuit comprising a first input node (108) coupled with an output of the switched-mode power supply via an inductor (106), a second input node (103) coupled with a node for applying a supply voltage of the switched-mode power supply, at least one input stage and first and second output stages, the first output stage comprising a first transistor connected between the first input node and an output node (116) of the regulation circuit, the second output stage comprising a second transistor connected between the second input node and the output node (116) of the regulation circuit, the gate of the first transistor of the first stage being coupled with the second node through a first switch (206), the substrate of the first transistor of the first stage being connected, via a second switch (208), to the first (108) or second (103) input node; and
- a first load (102), connected between the output node and ground, being supplied either by the switched-mode power supply in series with the regulation circuit or by the regulation circuit.

2. Circuit according to claim 1, wherein the switched-mode power supply is coupled to the first node (108) through an inductor (106), the first node being coupled to ground through a capacitance (110).

3. Circuit according to claim 1 or 2, wherein the regulation circuit comprises:
- a first linear voltage regulator comprising a first input stage and the first output stage; and
- a second linear voltage regulator comprising a second input stage and the second output stage.

4. Circuit according to any one of claims 1 to 3, wherein the regulation circuit comprises a single input stage and two output stages.

5. Circuit according to any one of claims 1 to 4, wherein the or each input stage comprises an operational amplifier and each output stage comprises a transistor.

6. A circuit according to any of claims 1 to 5, wherein each output stage comprises a switch.

7. Circuit according to any one of claims 1 to 6, comprising a second load (112) supplied by the switched-mode power supply (104).

8. Circuit according to claim 7, wherein the second load (112) comprises a circuit for transmitting and/or receiving radiofrequency signals.

9. Method for controlling an electronic circuit comprising a first load (102) powered either by a switched-mode power supply (104) in series, via an inductor (106), with a linear voltage regulation circuit (302), or by the linear voltage regulation circuit (306), the first load being connected between an output node of the regulation circuit and ground, the linear voltage regulation circuit comprising a first input node (108) coupled with an output of the switched-mode power supply, a second input node (103) coupled with a node for applying a supply voltage of the switched-mode power supply, at least one input stage and first and second output stages, the first output stage comprising a first transistor connected between the first input node and an output node (116) of the regulation circuit, the second output stage comprising a second transistor connected between the second input node and the output node (116) of the regulation circuit, the gate of the first transistor of the first stage being coupled with the second node through a first switch (206), the substrate of the first transistor of the first stage being connected, via a second switch (208), to the first (108) or second (103) input node, the method comprising:
- a first step during which the switched-mode power supply and the regulation circuit are started, the first load being powered by the regulation circuit alone; and
- a second step during which the first load is supplied by the switched-mode power supply in series with the regulation circuit.

10. Method according to claim 9, wherein transiting from the first step to the second step is performed after the end of the initialisation of the switched-mode power supply (104).

11. Method according to claim 9 or 10, wherein the linear voltage regulation circuit comprises at least one input stage and first and second output stages.

12. Method according to any of claims 9 to 11, wherein in the first step, a third switch (304), connected between the first load and the first regulator, is switched off and a fourth switch (308), connected between the first load and the second regulator, is switched on, and, in the second step, the third switch is switched on and the fourth switch is switched off.
